# EUROPEAN PATENT SPECIFICATION

(11) **EP 2 769 655 B1**
(45) Date of publication and mention of the grant of the patent: **30.11.2016**
(21) Application number: 13176137.1
(22) Date of filing: 11.07.2013
(51) Int. Cl.: A47J 45/10, A47J 45/07

(54) **A detachable handle for pans**
Abnehmbares Griffteil für Pfannen
Poignée amovible pour poêles

(30) Priority: 25.02.2013 CN 201320083620 U
(43) Date of publication of application: 27.08.2014
(73) Proprietor: FEM Industries Co., Ltd., KunShan Jiangsu (CN)
(72) Inventor: Jin, MingHe, KunShan, Jiangsu (CN)
(74) Representative: Gille Hrabal

(56) References cited:
- US-A- 3 272 547
- US-A- 3 306 647

## Description

### Technical field

The present invention relates to the technical field of cookware, particularly involving a detachable handle for pans.

### Background art

Pan is a cookware frequently used in daily life. The pans in prior art may be divided into two types: pans with handles and pans without handles. As to the pans with handles, the handle and the cook body are usually fixed together in non-detachable form. When the handle is permanently fixed to the pan, it brings some problems that the pan occupies too much room, and therefore more troubles when cleaning or storing such pans. As to the pans without handles, e.g. the inner tanks of electrical rice cookers, the soup pots, the baking or grilling plates, and the inner tanks of pressure cookers, etc., people usually need some thermal insulation gloves or pads to hold up such pans, in order not to burn their hands. It is therefore inconvenience that people can not hold such pans casually at any time.

US 3 306 647 discloses a detachable handle according to the preamble of claim 1. In an open state (see Fig. 3), the locking cam portion 33 is not in contact with the follower portion 29 any more.

### Contents of the invention

Against the deficiencies existing in the prior art, our invention is aimed to provide a detachable handle, with which it is possible to hold the cook body directly, safely and reliably, although the cook body is not equipped with a permanent handle. This detachable handle of the present invention can be used for various pans with different sizes. Its construction is smarter and more reasonable. Its cost and price can be cheaper. It is easy to operate and convenient to attach to or remove from the cook body. It can satisfy the requirement of durability and heavy loading.

To achieve above aims, the present invention provides a detachable handle for pans as defined in claim 1.

Preferably, said detachable handle for pans further comprises a pin and a fixing axle; wherein one end of said handle member is equipped with a hole for the pin, said movable clamping member is equipped with through-holes on two side walls, said through-holes correspond to said hole for the pin, said pin is inserted through said through-holes and also through said hole for the pin, so that the movable clamping member is attached to said handle member; said movable actuation member is fixed by said fixing axle at one end of said handle member, said movable actuation member can rotate around said fixing axle.

Preferably, said fixed clamping member is equipped with a surface suitable for pans. In order to bring said detachable handle into better contact with cook body of the pan, said fixed clamping member is equipped with a surface suitable for pans; said surface suitable for pans can be a smooth curved surface, which can keep in close contact with the cook body.

Preferably, said handle member is provided with a hand grip, said hand grip can be equipped with a curved concave for gripping. In order to make the users feel more comfortable, said handle member can be provided with a curved concave for gripping.

Preferably, said curved concave for gripping is provided with anti-slip ribs. In order to increase the friction between the hand and the handle, said handle is provided with anti-slip ribs on the curved concave for gripping.

Preferably, said handle member, said movable actuation member, said fixed clamping member and said movable clamping member are all made of plastic materials.

When said detachable handle for pans is in use, the movable actuation member should be pulled upwards; because the block of movable actuation member is engaged in the groove of movable clamping member, it drives the movable clamping member to move and open, so that the fixed clamping member and the movable clamping member are in an open state. In this state, the detachable handle for pans can be used to clamp the cook body of the pan. After that, the actuation member is pushed down, the movable clamping member moves back and comes into a closed state with the fixed clamping member, i.e. the detachable handle clamps the pan firmly. Hence, said detachable handle is not only easy to produce with a low cost, but also convenient and reliable in use.

Therefore, the present invention has several advantages, such as, said detachable handle for pans can be used to lift pans directly, safely and reliably; it is suitable for various pans with different sizes; its construction is smarter and more reasonable; its cost and price can be cheaper; it is easy to operate and convenient to attach to or remove from the cook body; it can satisfy the requirement of durability and heavy loading.

### Brief description of the drawings

Figure 1 is a schematic view representing a detachable handle for pans as a preferred embodiment of present invention.
Figure 2 is a schematic view representing a use state of the detachable handle for pans as a preferred embodiment of present invention.

Reference signs in the drawings: 1. handle member; 2. fixed clamping member; 3. movable clamping member; 4. movable actuation member; 5. pin; 6. fixing axle; 20. surface suitable for pans; 30. groove; 40. block.

### Embodiments of the invention

Here are preferred embodiments of present invention described with reference to the drawings, so that it is easier for the skilled person to understand the advantages and characteristics of present invention, and then the protection scope of present invention can be defined clearly.

### Embodiment 1:

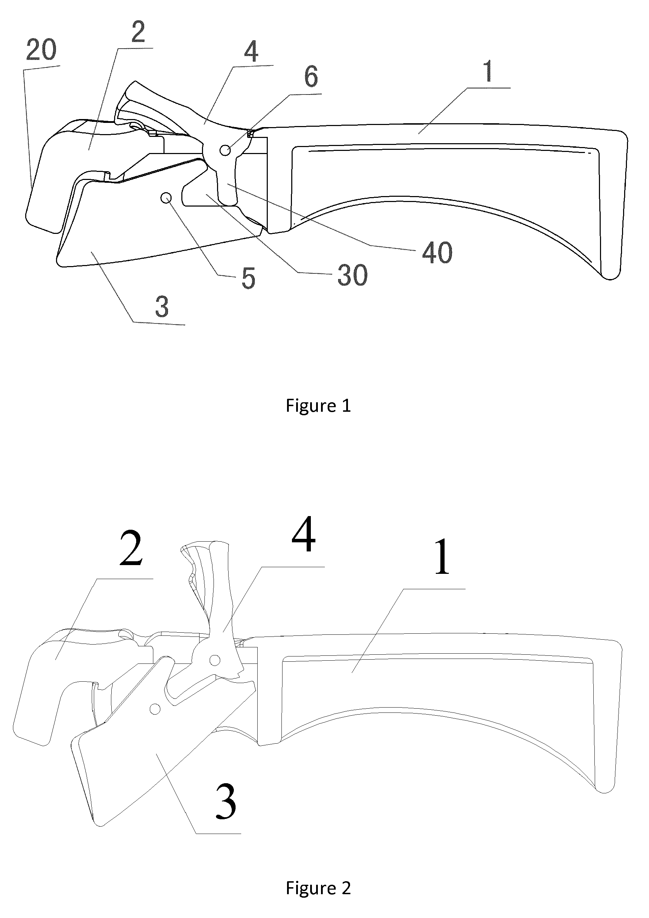

As shown in Figure 1 and Figure 2, the embodiment provides a detachable handle for pans, comprising a handle member 1, a pin 5, a fixing axle 6, a movable actuation member 4, a fixed clamping member 2, and a movable clamping member 3; wherein one end of the handle member 1 is equipped with a hole for the pin, the fixed clamping member 2 is fixed at one end of the handle member 1, the movable clamping member 3 is arranged below the fixed clamping member 4; the movable clamping member 3 is equipped with through-holes on two side walls, said through-holes correspond to said hole for the pin, said pin 5 is inserted through said through-holes and also through said hole for the pin, so that the movable clamping member 3 is attached to the handle member 1; the movable actuation member 4 is fixed by said fixing axle 6 at one end of the handle member 1, the movable actuation member 4 can rotate around said fixing axle 6; the movable actuation member 4 is equipped with a block 40, the movable clamping member 3 is equipped with a groove 30 on its side, and the block 40 can be engaged in the groove 30.

In this embodiment, the fixed clamping member 2 is equipped with a surface suitable for pans 20.

In this embodiment, the handle member 1, the movable actuation member 4, the fixed clamping member 2 and the movable clamping member 3 are all made of plastic materials, e.g. Polyamide 66 of high toughness.

The use state of the detachable handle for pans can be described as follows:

At first, the movable actuation member 4 in Figure 1 is pulled upwards and then rotates clockwise into the position in Figure 2. Because the block 40 of movable actuation member 4 is engaged in the groove 30 of movable clamping member 3, it drives the movable clamping member 3 to rotate counterclockwise into position in Figure 2. Therefore the fixed clamping member 2 and the movable clamping member 3 are in an open state. In this state, the detachable handle for pans can be placed to grip the cook body. After that, the actuation member 4 is pushed down and rotates counterclockwise back into the position in Figure 1. The block 40 of movable actuation member 4 drives the movable clamping member 3 to move clockwise back into position in Figure 1. Therefore, the fixed clamping member 2 and the movable clamping member 3 come into a closed state.

When the user lifts the pan by this detachable handle, the cook body gives the movable clamping member 3 a pressure and brings it a torque of counterclockwise rotation. The block 40 transfers such torque to the movable actuation member 4 and brings the actuation member 4 a torque of counterclockwise rotation. But from the position of Figure 1, further counterclockwise rotation of actuation member 4 is not possible any more, since it is blocked by the main body of actuation member 4 itself.

Compared with the construction that the movable clamping member is arranged at the upper side of the handle and the fixed clamping member is arranged at the lower side of the handle, we arrange the movable clamping member 3 below the fixed clamping member 2 for special reasons. We found out when the pan is lifted up by the detachable handle, the cook body might lean slightly, and the upper edge of the cook body might tilt upward to the clamping member of the upper side, especially when the pan is loaded with heavy food. It means the clamping member of the upper side has to bear lots of rotation torque from the loading because of the tilted edge of the cook body. If the clamping member of the upper side is movable, its endurance resistance is inevitably reduced. On the contrary, if the clamping member of the upper side is not movable, the lifetime of performance and the amount of loading can be increased obviously. Besides, when the cook body leans slightly, the movable clamping member of the lower side provides a support from the bottom rather than a grip from the top, which can bring better contact with the surface of the cook body.

Hence, such construction provides a firm and reliable clamping of the pans. This construction is simple but effective. Extra force to counteract the pressure of cook body, such as spring or extra lock, is not necessary any more. On one hand, this handle can be produced with simple process and low cost, which is important in economic views. On the other hand, this handle can also satisfy the requirement of high durability and heavy loading, which is practical and useful to customers.

### Embodiment 2:

As a further preferred embodiment, embodiment 2 differs from embodiment 1 in that the handle member 1 is provided with a hand grip, said hand grip is provided with a curved concave for gripping.

### Embodiment 3:

As a further preferred embodiment, embodiment 3 differs from embodiment 1 in that the handle member 1 is provided with a hand grip, said hand grip is provided with a curved concave for gripping, said curved concave for gripping is provided with anti-slip ribs.

### Embodiment 4:

As an alternative, embodiment 4 differs from embodiment 1 in that the handle member 1, the movable actuation member 4, the fixed clamping member 2 and the movable clamping member 3 are all made of stainless steel.

As above it provides a disclosure of the preferred embodiments of the invention, but it is not desired to limit the scope of invention to the exact constructions as described. Various modifications, alternative constructions, changes and equivalents, will be readily employed in relevant technical fields directly or indirectly, without departing from the scope of the invention as defined in the claims.

## Claims

1. A detachable handle for pans, comprising: a handle member (1), a movable actuation member (4), a fixed clamping member (2), and a movable clamping member (3); wherein said fixed clamping member (2) is fixed at one end of said handle member (1), said movable clamping member (3) is rotatable attached to said handle member (1), said movable clamping member (3) is arranged below said fixed clamping member (2), said movable actuation member (4) is equipped with a block (40), said movable clamping member (3) is equipped with a groove (30) on its side;
and the detachable handle is so configured that in a closed state when a pan body gives a pressure and brings a torque of rotation to the movable actuation member (4), the rotation of the actuation member (4) is blocked by the main body of the movable actuation member (4) itself;
**characterized in that**
said block (40) of the movable actuation member (4) is engaged in said groove (30) of the movable champing member (3) whether the detachable handle is in an open state or a closed state.

2. The detachable handle for pans according to claim 1, wherein the detachable handle is so configured that when it comes from an open state to a closed state, the movable actuation member (4) rotates counterclockwise and drives the movable clamping member (3) to move clockwise.

3. The detachable handle for pans according to claim 1, wherein the detachable handle is so configured that when a pan body gives the movable clamping member (3) a pressure and brings it a torque of counterclockwise rotation, the block (40) transfers such torque to the movable actuation member (4) and bring the movable actuation member (4) a torque of counterclockwise rotation.

4. The detachable handle for pans according to any of claims 1 to 3, further comprising: a pin (5) and a fixing axle (6); wherein one end of said handle member (1) is equipped with a hole for the pin, said movable clamping member (3) is equipped with through-holes on two side walls, said through-holes correspond to said hole for the pin, said pin (5) is inserted through said through-holes and also through said hole for the pin, so that the movable clamping member (3) is attached to said handle member (1); said movable actuation member (4) is fixed by said fixing axle (6) at one end of said handle member (1), said movable actuation member (4) can rotate around said fixing axle (6).

5. The detachable handle for pans according to claim 4, wherein said fixed clamping member (2) is equipped with a surface suitable for pans (20).

6. The detachable handle for pans according to claim 5, wherein said handle member (1) is provided with a hand grip, said hand grip is equipped with a curved concave for gripping.

7. The detachable handle for pans according to claim 6, wherein said curved concave for gripping is provided with anti-slip ribs.

8. The detachable handle for pans according to any of claims 1 to 7, wherein said handle member (1), said movable actuation member (4), said fixed clamping member (2) and said movable clamping member (3) are all made of plastic materials.

## Patentansprüche

1. Abnehmbares Griffteil für Pfannen, folgendes aufweisend: ein Griffelement (1), ein bewegliches Betätigungselement (4) ein feststehendes Klemmelement (2), und ein bewegliches Klemmelement (3); wobei das feststehende Klemmelement (2) an einem Ende des Griffelements (1) fixiert ist, das bewegliche Klemmelement (3) drehbar an dem Griffelement (1) befestigt ist, das bewegliches Klemmelement (3) unterhalb des feststehenden Klemmelements (2) angeordnet ist, das bewegliche Betätigungselement (4) mit einem Block (40) ausgestattet ist, das bewegliche Klemmelement (3) mit einer Nut (30) auf seiner Seite ausgestattet ist; und das abnehmbare Griffteil so konfiguriert ist, dass in einem geschlossenen Zustand, wenn ein Pfannenkörper einen Druck ausübt und ein Drehmoment auf das bewegliche Betätigungselement (4) aufbringt, die Drehung des Betätigungselements (4) durch den Hauptkörper des beweglichen Betätigungselements (4) selbst blockiert ist;
**dadurch gekennzeichnet, dass**
der Block (40) des beweglichen Betätigungselements (4) in der Nut (30) des beweglichen Klemmelements (3) angeordnet ist, gleich ob sich das abnehmbare Griffteil in einem offenen Zustand oder einem geschlossenen Zustand befindet.

2. Abnehmbares Griffteil für Pfannen nach Anspruch 1, wobei das abnehmbare Griffteil so konfiguriert ist, dass wenn es von einen offenen Zustand in einem geschlossenen Zustand übergeht, sich das bewegliche Betätigungselement (4) entgegen dem Uhrzeigersinn dreht und das bewegliche Klemmelement (3) betätigt, um sich im Uhrzeigersinn zu bewegen.

3. Abnehmbares Griffteil für Pfannen nach Anspruch 1, wobei das abnehmbare Griffteil so konfiguriert ist, dass wenn ein Pfannenkörper einen Druck auf das bewegliche Klemmelement (3) ausübt und ihm ein Drehmoment entgegen dem Uhrzeigersinn verleiht, der Block (40) ein solches Drehmoment auf das bewegliche Betätigungselement (4) überträgt und ein Drehmoment entgegen dem Uhrzeigersinn auf das bewegliche Betätigungselement (4) aufbringt.

4. Abnehmbares Griffteil für Pfannen nach einem der Ansprüche 1 bis 3, weiterhin folgendes umfassend: einen Stift (5) und eine Befestigungsachse (6); wobei ein Ende des Griffelements (1) mit einem Loch für den Stift ausgestattet ist, wobei das bewegliche Klemmelement (3) mit Durchgangslöchern in zwei Seitenwänden ausgestattet ist, wobei die Durchgangslöcherndem Loch für den Stift entsprechen, wobei der Stift (5) durch die Durchgangslöcher und auch durch das Loch für den Stift eingeführt wird, damit das bewegliche Klemmelement (3) am Griffelement (1) angebracht wird, wobei das bewegliche Betätigungselement (4) durch die Befestigungsachse(6) an einem Ende des Griffelements (1) befestigt ist, wobei das bewegliche Betätigungselement (4) sich um die Befestigungsachse (6) drehen kann.

5. Abnehmbares Griffteil für Pfannen nach Anspruch 4, wobei das feststehende Klemmelement (2) mit einer für Pfannen (20) geeigneten Oberfläche ausgestattet ist.

6. Abnehmbares Griffteil für Pfannen nach Anspruch 5, wobei das Griffelement (1) mit einem Handgriff bereitgestellt ist, wobei der Handgriff mit einer gebogenen Konkaven zum Anfassen ausgestattet ist.

7. Abnehmbares Griffteil für Pfannen nach Anspruch 6, wobei die gebogene Konkave zum Anfassen mit Antirutschrippen bereitgestellt ist.

8. Abnehmbares Griffteil für Pfannen nach einem der Ansprüche 1bis 7, wobei das Griffelement (1), das bewegliche Betätigungselement (4), das feststehende Klemmelement (2) und das bewegliche Klemmelement (3) allesamt aus Kunststoff hergestellt sind.

## Revendications

1. Poignée amovible pour poêles, comprenant : un élément de poignée (1), un élément d'actionnement amovible (4) un élément de serrage fixé (2), et un élément de serrage amovible (3); dans laquelle ledit élément de serrage fixé (2) est fixé à un bout dudit élément de poignée (1), ledit élément de serrage amovible (3) est attaché de manière rotative audit élément de poignée (1), ledit élément de serrage amovible (3) est arrangé au-dessous dudit élément de serrage fixé (2), ledit élément d'actionnement amovible (4) est équipé avec un bloc (40), ledit élément de serrage amovible (3) est équipé avec une rainure (30) sur son côté; et la poignée amovible est configurée tel que dans un état fermé, lorsqu'un corps de poêle donne une pression et apporte un couple à l'élément d'actionnement amovible (4), la rotation de l'élément d'actionnement (4) est bloquée par le corps principale de l'élément d'actionnement amovible (4) lui-même ;
**caractérisée par le fait que**
ledit bloc (40) de l'élément d'actionnement amovible (4) est engagé dans ladite rainure (30) de l'élément de serrage amovible (3) n'importe que la poignée amovible est dans un état ouvert ou dans un état fermé.

2. Poignée amovible pour poêles selon la revendication 1, dans laquelle la poignée amovible est configurée telle que lorsqu'elle vient d'un état ouvert à un état fermé, l'élément d'actionnement amovible (4) tourne dans le sens inverse des aiguilles d'une montre et actionne l'élément de serrage amovible (3) afin de se déplacer dans le sens des aiguilles d'une montre.

3. Poignée amovible pour poêles selon la revendication 1, dans laquelle la poignée amovible est configurée telle que lorsqu'un corps de poêle donne une pression à l'élément de serrage amovible (3) et lui apporte un couple dans le sens inverse des aiguilles d'une montre, le bloc (40) met de tel couple à l'élément d'actionnement amovible (4) et apporte un couple dans le sens inverse des aiguilles d'une montre rotation à l'élément d'actionnement amovible (4).

4. Poignée amovible pour poêles selon l'une des revendications 1 à 3, comprenant en outre : une épingle (5) et un arbre de fixation (6); dans laquelle un bout dudit élément de poignée (1) est équipé avec un trou pour l'épingle, ledit élément de serrage amovible (3) étant équipé avec des trous débouchants sur deux parois latérales, lesdits trous débouchants correspondant avec ledit trou pour l'épingle, ledit épingle (5) étant insérée à travers lesdits trous débouchants et aussi à travers ledit trou pour l'épingle, pour que l'élément de serrage amovible (3) soit attaché audit élément de poignée (1); ledit élément d'actionnement (4) amovible étant fixé par ledit arbre de fixation (6) à un bout dudit élément de poignée (1), ledit élément d'actionnement amovible (4) pouvant tourner autour ledit arbre de fixation (fui).

5. Poignée amovible pour poêles selon la revendication 4, dans laquelle ledit élément de serrage fixé (2) est équipé avec une surface apte aux poêles (20).

6. Poignée amovible pour poêles selon la revendication 5, dans laquelle ledit élément de poignée (1) est agencé avec une poignée de main, ladite poignée de main est équipée avec une concave courbée pour saisir.

7. Poignée amovible pour poêles selon la revendication 6, dans laquelle ladite concave courbée pour saisir est agencée avec des nervures antiglisse.

8. Poignée amovible pour poêles selon l'une des revendications 1 à 7, dans laquelle ledit élément de poignée (1), ledit élément d'actionnement amovible (4), ledit élément de serrage fixé (2) et ledit élément de serrage amovible (3) sont tous fabriqués de matière plastique.
